(19) Europäisches Patentamt / European Patent Office / Office européen des brevets

(11) **EP 2 493 067 B1**

(12) **EUROPEAN PATENT SPECIFICATION**

(45) Date of publication and mention
of the grant of the patent:
**04.04.2018   Bulletin 2018/14**

(51) Int Cl.:
*H02P 21/14* *(2016.01)*     *H02P 25/08* *(2016.01)*

(21) Application number: **11155284.0**

(22) Date of filing: **22.02.2011**

(54) **Method and apparatus for estimating rotor angle of synchronous reluctance motor**

Verfahren und Vorrichtung zur Einschätzung des Drehwinkels eines synchronen Reluktanzmotors

Procédé et appareil pour estimer l'angle de rotor d'un moteur à réluctance synchrone

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012   Bulletin 2012/35**

(73) Proprietor: **ABB Oy
00380 Helsinki (FI)**

(72) Inventor: **Veijanen, Matti
02360 Espoo (FI)**

(74) Representative: **Kolster Oy Ab
(Salmisaarenaukio 1)
P.O. Box 204
00181 Helsinki (FI)**

(56) References cited:
• **SEOG-JOO KANG ET AL: "Position controlled synchronous reluctance motor without rotational transducer", INDUSTRY APPLICATIONS CONFERENCE, 1998. THIRTY-THIRD IAS ANNUAL MEETIN G. THE 1998 IEEE ST. LOUIS, MO, USA 12-15 OCT. 1998, NEW YORK, NY, USA,IEEE, US, vol. 1, 12 October 1998 (1998-10-12), pages 671-676, XP010313145, DOI: 10.1109/IAS.1998.732400 ISBN: 978-0-7803-4943-8**
• **NAGRIAL M H: "Developments of sensorless synchronous reluctance drive systems", MULTI TOPIC CONFERENCE, 2001. IEEE INMIC 2001. TECHNOLOGY FOR THE 21ST CENTURY. PROCEEDINGS. IEEE INTERNATIONAL LAHORE, PAKISTAN 28-30 DEC. 2001, PISCATAWAY, NJ, USA,IEEE, US, 28 December 2001 (2001-12-28), pages 104-110, XP010588492, ISBN: 978-0-7803-7406-5**

**Description**

FIELD OF THE INVENTION

The present invention relates to synchronous motors, and particularly to estimating a rotor angle of a synchronous reluctance motor (SYRM).

BACKGROUND INFORMATION

A synchronous motor is an AC motor comprising a rotor and a stator, distinguished by the rotor spinning synchronously with stator frequency. There are two major types of synchronous motors: non-excited and direct-current excited. Reluctance motors belong to the former group.

When operating a synchronous motor, an angle and/or speed of a rotor of the motor typically have to be known. The angle and speed can, for instance, be detected by using a position sensor. The position sensor, however, may add costs and unreliability to the system.

Document Seog-Joo Kang et al: "Position Controlled Synchronous Reluctance Motor Without Rotational Transducer", Industry Applications Conference, 1998, presents a position sensorless control scheme of reluctance motor. In a low speed region, the position is estimated by using a high frequency current injection. In a high speed region, the position is estimated by using flux estimation based on the stator voltages.

Document Nagrial M. H.: "Developments of Sensorless Synchrounous Reluctance Drive Systems", Multi Topic Conference, 2001, discusses the development of synchronous reluctance drive systems. Various sensorless techniques are discussed and reviewed.

SUMMARY

An object of the present invention to provide a method and an apparatus for implementing the method so as to alleviate the above problems. The objects of the invention are achieved by a method and an apparatus which are characterized by what is stated in the independent claims. Preferred embodiments of the invention are disclosed in the dependent claims.

It is possible to determine the angle and the speed of the rotor of the SYRM by using a mathematical motor model utilizing saliency of the rotor. The saliency of the rotor has to be known. When direct ($d$) axis and quadrature ($q$) axis inductances are known, the rotor position can be derived from the computational voltage and current models of the SYRM, provided there is a stator flux in the motor. For instance, estimators using the direct ($d$) axis and quadrature ($q$) axis inductances may be formed. By weighting the estimator results on the basis of the rotor orientation in regard to the stator flux, accuracy of the rotor angle estimate may be improved.

BRIEF DESCRIPTION OF THE DRAWINGS

In the following, the disclosure will be described in greater detail by means of preferred embodiments with reference to the accompanying drawings, in which

Figures 1a, 1b, and 1c illustrate loci of $d$-axis oriented rotor orientation vectors and stator current as functions of a rotor angle;
Figures 2a and 2b illustrate example weighting functions for rotor angle estimates;
Figure 3 illustrates a simplified diagram of a PLL adapted for estimating the rotor speed of a synchronous reluctance motor, and
Figure 4 illustrates an arrangement to which an exemplary method of the disclosure may be applied.

DETAILED DESCRIPTION

In machine types like permanent magnet motors and induction motors, a rotor flux component may not be unambiguously determinable from a stator voltage integral. There is no permanent magnet flux in a SYRM, so the stator flux and the stator current are directly bound to each other by an inductance relation in rotor coordinates.

The inductance in the rotor coordinates is represented by two components: a $d$-axis inductance component $L_d$ and a $q$-axis inductance component $L_q$. A difference between these two parameters is a basis for operation of a reluctance motor.

If the inductance components of a synchronous reluctance motor are known, they can be used in rotor orientation estimation. The stator flux and the stator current are first determined. A first estimate of the rotor orientation may then be formed on the basis of the stator flux, the stator current, and a known rotor inductance component. A direct axis oriented rotor orientation vector $\vec{\theta}_d$ may be calculated from a difference between the stator flux $\vec{\psi}_s$ and a product of an inductance component $L_q$ and the stator current $\vec{i}_s$, as follows:

$$\vec{\theta}_d = \pm\left(\vec{\psi}_s - L_q\vec{i}_s\right). \tag{1}$$

The $\pm$ sign in Equation 1 represents two different rotor orientations related to a same pole. In general, there is no difference between these orientations, owing to the lack of a permanent magnet induced flux, and therefore in some embodiments the signs can be omitted.

Similarly, a quadrature axis oriented rotor orientation vector $\vec{\theta}_q$ may be calculated using the other inductance component $L_d$, as follows:

$$\vec{\theta}_q = \pm\left(\vec{\psi}_s - L_d\vec{i}_s\right). \tag{2}$$

In some embodiments, the first estimate may be formed on the basis of the orientation vector of Equation 1 or 2. The rotor orientation may then be determined on the basis of the first estimate.

The estimated rotor orientation may also be represented in the form of an angle. The vectors of Equations 1 and 2 may be used to estimate a rotor orientation angle. The first estimate may be determined on the basis of a ratio between an $x$ component and an $y$ component of an orientation vector $\vec{\theta}_d$ or $\vec{\theta}_q$, for instance, as follows:

$$\theta_{est} = \arctan\left(\frac{\theta_x}{\theta_y}\right) + \frac{\pi}{2} \pm \frac{\pi}{2}, \tag{3}$$

where $\theta_{est}$ is the estimated rotor orientation angle, $\theta_x$ and $\theta_y$ are the $x$ and $y$ components of an orientation vector. The $\pm$ sign represents two different rotor orientation angles related to a same pole.

A second estimate of the rotor orientation may be formed on the basis of the stator flux, the stator current, and the other known rotor inductance component. In other words, another orientation vector may be formed. Similarly to the first estimate, the second estimate may be represented by an orientation vector. The two orientation vectors may be formed such that they have the same orientation. The second estimate may also be represented by an angle determined on the basis of a ratio between an $x$ component and a $y$ component of the orientation vector.

One way to implement the method of the disclosure is disclosed next. After the stator flux and stator current are determined, two orthogonal stator flux components in a stator reference frame are calculated from the stator flux, and two orthogonal stator current components in the stator reference frame are calculated from the stator current. Then, estimates of the rotor orientation may be formed by using the stator flux components, the stator current components, and the known rotor inductance components.

By using Equations 1 and 2, it is possible to calculate two rotor orientation vectors: a first rotor orientation vector $\vec{\theta}_{d,1}$ and a second rotor orientation vector $\vec{\theta}_{d,2}$. They can, for instance, be calculated as follows:

$$\vec{\theta}_{d,1} = \pm\left(\psi_x - L_q i_x + j\left(\psi_y - L_q i_y\right)\right), \tag{4}$$

$$\vec{\theta}_{d,2} = \pm\left(L_d i_y - \psi_y + j\left(\psi_x - L_d i_x\right)\right). \tag{5}$$

$\psi_x$ and $\psi_y$ are two orthogonal stator flux components in the stator reference frame, calculated from the stator flux $\vec{\psi}_s$. $i_x$ and $i_y$ are two orthogonal stator current components in the stator reference frame, calculated from the stator current $\vec{i}_s$. In Equation 5, the quadrature oriented vector of Equation 2 is rotated by 90 degrees by switching the real part and the imaginary part of the vector, and by multiplying the new real part by -1.

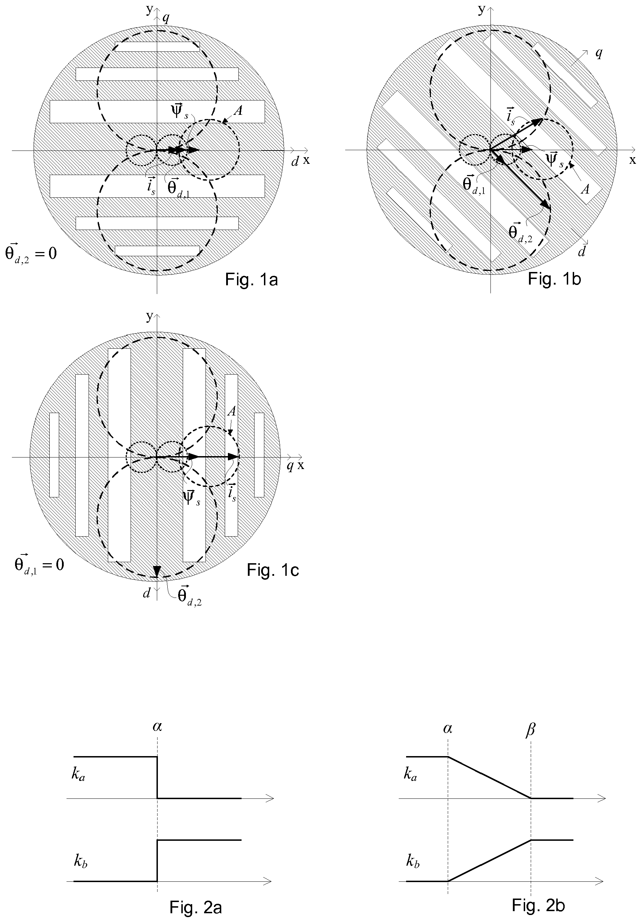

The two rotor orientation vectors in Equations 4 and 5 are always aligned with the rotor $d$-axis. This can be seen in Figures 1a, 1b, and 1c, which show the loci of the $d$-axis oriented rotor orientation vectors and the stator current as functions of a rotor angle. Estimators using $q$-axis oriented vectors may also be used to determine the rotor angle.

As the rotor turns in respect of the stator flux $\vec{\psi}_s$, the stator current vector $\vec{i}_s$ end follows a circle $A$. The circle *A* has its centre aligned with the stator flux vector $\vec{\psi}_s$. In Figures 1a, 1b, and 1c, the stator flux $\vec{\psi}_s$ is kept constant at *x*-axis, *d*-axis inductance component $L_d$ is 2, and *q*-axis inductance component *Lq* is 0.5. The stator current vector $\vec{i}_s$ end makes a full round along the circle *A* as the rotor rotates a full electrical angle. In the case of a single pole-pair motor, as in Figures 1a, 1b, and 1c, this means that the stator current vector $\vec{i}_s$ end makes two full rounds as the rotor mechanically rotates a full round.

The *d*-axis oriented first rotor orientation vector $\vec{\theta}_{d,1}$ has a zero length point when the stator flux is aligned with the *q*-axis and the *d*-axis oriented second rotor orientation vector $\vec{\theta}_{d,2}$ has a zero length point when the stator flux is aligned with the *d*-axis. In a similar manner, a first and a second rotor orientation vector aligned with *q*-axis may also be calculated.

If necessary, a rotor angle may be determined on the basis of a ratio between an *x* component and an *y* component of the first or the second rotor orientation vector. The orientation vectors can be *d*- or *q*-axis oriented. For instance, the rotor direct axis angle can be calculated from the rotor orientation vectors $\vec{\theta}_{d,1}$ and $\vec{\theta}_{d,2}$ with following rotor orientation angle estimators $\overrightarrow{\theta}_{est,1}$ and $\overrightarrow{\theta}_{est,}2$, respectively:

$$\theta_{est,1} = \arctan\left(\frac{\psi_y - L_q i_y}{\psi_x - L_q i_x}\right) + \frac{\pi}{2} \pm \frac{\pi}{2} , \qquad (6)$$

$$\theta_{est,2} = \arctan\left(\frac{\psi_x - L_d i_x}{L_d i_y - \psi_y}\right) + \frac{\pi}{2} \pm \frac{\pi}{2} . \qquad (7)$$

The numerators and the denominators of these estimators are the *y* component and *x* components of the *d*-axis oriented rotor orientation vectors $\vec{\theta}_{d,1}$ and $\vec{\theta}_{d,2}$. Similarly to equation 3, the $\pm$ sign represents two different rotor orientation angles related to a same pole.

In theory, the estimators should give perfect orientation estimates in all other orientations but the zero length orientations. In practice, the parameter errors related to $L_d$ and *Lq* may significantly affect the accuracy anywhere near the zero length orientations. As illustrated in Figures 1a, 1b, and 1c, the rotor orientation angle estimator $\overrightarrow{\theta}_{est,1}$ is more accurate when the stator flux is near the *d*-axis of the rotor. Correspondingly, the estimator $\overleftrightarrow{\theta}_{est,2}$ is more accurate when the stator flux is near the *q*-axis of the rotor.

An angle between the stator flux and the rotor direct axis may change, for instance because of a change in a load. As a response to the change in the load, the torque may have to change. In order to produce a different torque, an angle between the stator flux and the rotor direct axis may have to be changed. As this angle changes, the rotor orientation vectors may, at some point, have zero lengths, thus affecting the accuracy of the estimator using the vector.

Therefore, in order to improve the accuracy, the rotor angle may be estimated on the basis of two estimates. A first estimate of the rotor orientation may be formed on the basis of the stator flux components, the stator current components, and one of the known rotor inductance components. The rotor orientation vector $\vec{\theta}_{d,1}$ of Equation 4 may, for instance, produce the first estimate. A second estimate of the rotor orientation may be formed on the basis of the stator flux components, the stator current components, and the other known rotor inductance component. The rotor orientation vector $\vec{\theta}_{d,2}$ of Equation 5 may, for instance, produce the second estimate. Thus, the two estimates use different rotor orientation vectors having different zero length orientations. Even if a rotor orientation vector related to one of the estimates is at its zero length orientation, the other estimate gives an accurate value for the rotor angle.

The first rotor orientation vector $\vec{\theta}_{d,1}$ and the second rotor orientation vector $\vec{\theta}_{d,2}$ may be used together for estimating the rotor orientation. As the inductance components are not equal, maximum lengths of the orientation vectors using different inductance components are not equal. The length of a vector may be corrected using a correction parameter. Thus, a third orientation vector $\vec{\theta}_{d,sum}$ may be formed, for instance, as follows:

$$\vec{\theta}_{d,sum} = \vec{\theta}_{d,1} + l\vec{\theta}_{d,2} , \qquad (8)$$

where *l* is a correction parameter for which a value can be determined, for instance, on the basis of a ratio between the rotor inductance components. When both estimators are used together, the correct signs may have to be selected in order to have consistent orientations in every quarter of the rotor coordinates.

An orientation of the rotor can also be used to decide how to use the two estimates. The orientation may, for instance, be represented by an angle between the rotor direct axis and the stator flux, or by an angle between the rotor direct axis and the stator current. This angle may, for instance, be calculated using a rotor orientation estimate calculated previously. Values for one or more weighting parameters may then be calculated on the basis of the orientation of the rotor. The estimates may then be weighted on the basis of the weighting parameters. The weighted values of the estimates may then, for instance, be added together to estimate the rotor orientation. The weighting parameters may also be calculated by other means. For instance, the lengths of the orientation vectors, or a ratio between the lengths of the vectors, may be used.

Figure 2a illustrates an example of weighting functions for two weighting parameters $k_a$ and $k_b$. The parameters $k_a$ and $k_b$ are used with the first and the second estimates, respectively, to produce a rotor orientation estimate. The first weighting parameter t $k_a$ has the value of one when an absolute value of the angle between the rotor direct axis and the stator flux, representing the rotor orientation in regard of stator flux, is less than an angle $\alpha$. Otherwise the first weight coefficient has the value of zero. The second weight coefficient $k_b$ is zero when the absolute value of the angle between the rotor direct axis and the stator flux is less than the angle $\alpha$, and one when the absolute value of the angle between the rotor direct axis and the stator flux exceeds the set angle $\alpha$. In other words, if the absolute value of the angle between the rotor direct axis and the stator flux is less than the angle $\alpha$, the rotor orientation estimate is based solely on the first estimate. Otherwise, only the second estimate is used to determine the rotor orientation.

Other weighting coefficient functions may also be used. In Figure 2b, a ratio between the weighting parameters $k_a$ and $k_b$ changes linearly with the absolute value of the angle between the rotor direct axis and the stator flux, when between angles $\alpha$ and $\beta$. The final rotor orientation estimate may, for instance, be the sum of both estimates. In other words, between the angles $\alpha$ and $\beta$, both first and second estimate affect the final rotor orientation estimate. Also other, linear or nonlinear weighting coefficient functions may be used.

If the rotor is rotating at a speed that is not known, the speed can be estimated on the basis of the estimated orientation. For instance, a speed estimate can simply be calculated from a time derivate of the rotor position. A simple phase locked loop (PLL) can also be utilized to obtain a filtered speed estimate from the rotor orientation estimate. Other methods may also be used to obtain a speed estimate from the estimated rotor orientation.

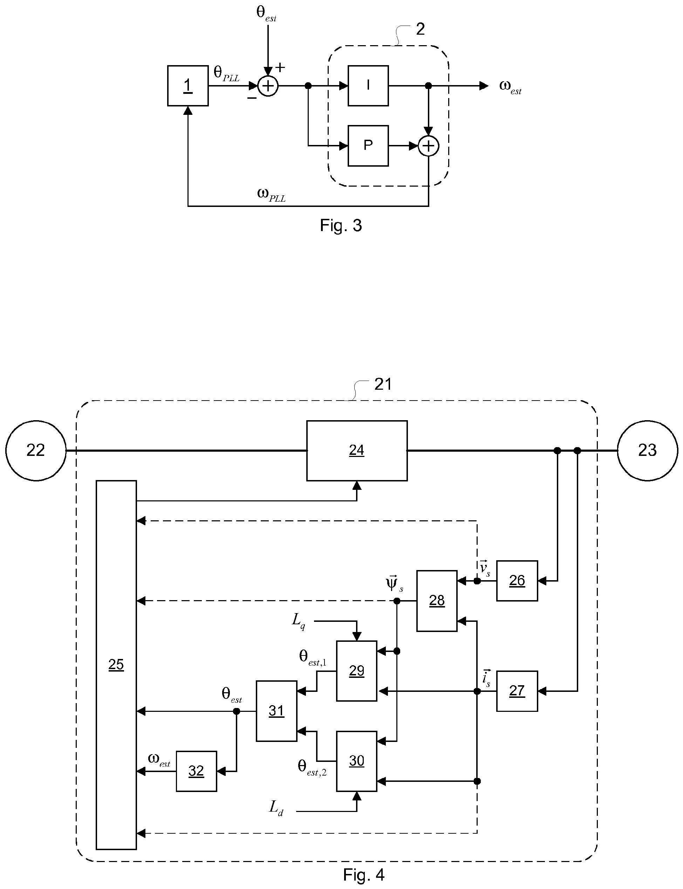

Figure 3 illustrates a simplified diagram of a PLL adapted for estimating the rotor speed of a synchronous reluctance motor on the basis of the estimated rotor orientation $\theta_{est}$.

The PLL calculates an estimate $\omega_{est}$ for the rotor speed on the basis of a difference between a feedback angle term $\theta_{PLL}$ and the rotor orientation angle $\theta_{est}$. A value for a feedback angle term $\theta_{PLL}$ is calculated by integrating, using integrating means 1, the feedback speed term $\omega_{PLL}$, for which a value is determined on the basis of a difference between the feedback angle term $\theta_{PLL}$ and the rotor orientation angle $\theta_{est}$. The value for a feedback speed term $\omega_{PLL}$ may, for instance, be determined using a PI controller 2, as in Figure 2. An integrative part I of the PI-controller 2 is also used to produce the speed estimate $\omega_{est}$.

Figure 4 illustrates an arrangement where an apparatus 21 is connected between a supplying grid 22 and a synchronous reluctance motor 23. The motor comprises a stator and a rotor. A rotor quadrature axis inductance component $L_q$ and a rotor direct axis inductance component $L_d$ are known. The apparatus 21 is capable of controlling the motor 23, using a motor controller.

In Figure 4, the apparatus 21 is a frequency converter and the motor controller is an inverter bridge 24. The inverter bridge 24 is controlled by a flux controller 25. Also other controllers, for instance a current controller, may be used. The flux controller 25 uses an estimated rotor orientation and speed as input parameters. The controller may, as in Figure 4, use also other inputs, such as a stator current, a stator voltage or a stator flux.

In the arrangement, the stator flux and the stator current are determined in order to estimate the rotor orientation and speed. Thus, the apparatus comprises a stator voltage measuring unit 26 and a stator current measuring unit 27. The stator current measuring unit 27 also calculates two orthogonal stator current components in the stator reference frame from the stator current.

The stator flux is then determined using a voltage model 28. The voltage model 28 calculates the flux as an integral of the stator voltage minus resistive losses. The voltage model 28 also calculates two orthogonal stator current components in the stator reference frame from the stator current.

The apparatus 21 comprises a first rotor orientation estimator 29 and a second rotor orientation estimator 30. The first rotor orientation estimator 29 uses the stator flux components, the stator current components, and one of the known rotor inductance components as inputs. It produces a first estimate of the rotor orientation. The first rotor orientation estimator 29 may, for instance, calculate the $d$-axis oriented first rotor orientation vector by using the known rotor $q$-axis inductance component $Lq$, the stator flux components, and the stator current components, as defined in Equation 4. The first rotor orientation estimator 29 may use the the orientation vector as the first estimate. Alternatively, it may use a rotor orientation angle calculated on the basis of the $d$-axis oriented first rotor orientation vector, for instance as defined in equation 6, as the first estimate.

The second rotor orientation estimator 30 uses the stator flux components, the stator current components, and the other known rotor inductance component as inputs. It produces a second estimate of the rotor orientation. The second rotor orientation estimator 30 may calculate the *d*-axis oriented second rotor orientation vector by using the known rotor *d*-axis inductance component $L_d$, the stator flux components, and the stator current components, as defined in Equation 5. The first rotor angle estimator 30 may then use the the second rotor orientation vector as the second estimate. Alternatively it may use a rotor orientation angle calculated on the basis of the *d*-axis oriented second rotor orientation vector, for instance as defined in Equation 7, as the second estimate.

A weighting function unit 31 then uses outputs of the first and the second estimator. It determines values for weighting parameters, for instance, on the basis of an absolute value of an angle between the rotor direct axis and the stator flux. The weighting function unit 31 then determines the rotor orientation on the basis of the first estimate and the second estimate. The outputs of the first and second estimators are weighted on the basis of the weighting parameters.

The apparatus also comprises a rotor speed estimator 32. The estimator 32 estimates the rotor speed of a synchronous reluctance motor on the basis of the rotor orientation. The method is similar to that disclosed in Figure 3 and the above description related to Figure 3. In the method, an initial value is first set for a feedback speed term. A value for a feedback angle term is then calculated by integrating the feedback speed term. An estimate for the rotor speed is determined on the basis of a difference between the feedback angle term and the rotor orientation. A new value for the feedback speed term is determined on the basis of a difference between the feedback angle term and the rotor orientation.

The method and related apparatus are described above with reference to the respective functions they perform according to exemplary embodiments. It is to be understood that one or more of these elements and functions can be implemented in a hardware configuration. For example, the respective components may comprise a computer processor configured to execute computer-readable instructions (e.g. computer-readable software), a non-volatile computer-readable recording medium, such as a memory element (e.g. ROM, flash memory, optical memory, etc.) configured to store such computer-readable instructions, and a volatile computer-readable recording medium (e.g. RAM) configured to be utilized by the computer processor as working memory while executing the computer-readable instructions. The methods and related apparatus may also be configured to sense, generate and/or operate in accordance with analog signals, digital signals and/or a combination of digital and analog signals to carry out their intended functions.

It will be obvious to a person skilled in the art that the inventive concept can be implemented in various ways. The invention and its embodiments are not limited to the examples described above but may vary within the scope of the claims.

**Claims**

1. A method of estimating a rotor orientation of a synchronous reluctance motor comprising a stator and a rotor, wherein an inductance of the rotor in rotor coordinates is represented by a known rotor quadrature axis inductance component ($L_q$) and a known rotor direct axis inductance component ($L_d$), and wherein the method comprises a step of determining a stator flux ($\vec{\psi_s}$) and a stator current ($\vec{i_s}$), **characterized in that** the method further comprises steps of forming a first estimate of the rotor orientation on the basis of the stator flux ($\vec{\psi_s}$), the stator current ($\vec{i_s}$), and one ($L_q$) of the known rotor inductance components,
forming a second estimate of the rotor orientation on the basis of the stator flux ($\vec{\psi_s}$), the stator current ($\vec{i_s}$), and the other known rotor inductance component ($L_d$),
determining values for weighting parameters ($k_a, k_b$), and
determining the rotor orientation on the basis of the first estimate and the second estimate, wherein the values of the first and second estimates are weighted on the basis of the weighting parameters ($k_a, k_b$).

2. A method according to claim 1, wherein the value for the weighting parameter is determined on the basis of an orientation represented by an angle between a rotor direct axis and the stator flux ($\vec{\psi_s}$).

3. A method according to claim 1, wherein the value for the weighting parameter is determined on the basis of an orientation represented by an angle between the rotor direct axis and the stator current ($\vec{i_s}$).

4. A method according to claim 1, wherein the value for the weighting parameter is determined on the basis of lengths of rotor orientation vectors ($\vec{\theta_{d,1}}, \vec{\theta_{d,2}}$).

5. A method according to any one of claims 1 to 4, wherein determining the rotor orientation comprises:

determining a value for a correction parameter (*l*) on the basis of a ratio between the rotor inductance components ($L_d$, $L_q$), and

using the correction parameter (*l*) to correct a length of an orientation vector ($\overrightarrow{\theta_{d,2}}$).

**6.** A method according to any one of claims 1 to 5, wherein forming the first estimate of the rotor orientation comprises calculating a first rotor orientation vector ($\overrightarrow{\theta_{d,1}}$) on the basis of the stator flux ($\overrightarrow{\psi_s}$), the stator current ($\overrightarrow{i_s}$), and one ($L_q$) of the known rotor inductance components, and

forming the first estimate on the basis of the first rotor orientation vector ($\overrightarrow{\theta_{d,1}}$), and wherein forming the second estimate of the rotor orientation comprises

calculating a second rotor orientation vector ($\overrightarrow{\theta_{d,2}}$) on the basis of the stator flux ($\overrightarrow{\psi_s}$), the stator current ($\overrightarrow{i_s}$), and the known other rotor inductance component ($L_d$), and

forming the second estimate on the basis of the second rotor orientation vector ($\overrightarrow{\theta_{d,2}}$).

**7.** A method according to any one of claims 1 to 5, wherein forming the first estimate of the rotor orientation comprises calculating a first rotor orientation vector ($\overrightarrow{\theta_{d,1}}$) on the basis of the stator flux ($\overrightarrow{\psi_s}$), the stator current ($\overrightarrow{i_s}$), and one ($L_q$) of the known rotor inductance components, and

forming the first estimate ($\overrightarrow{\theta_{est,1}}$) on the basis of a ratio between an *x* component and an *y* component of the first rotor orientation vector ($\overrightarrow{\theta_{d,1}}$), and wherein forming the second estimate of the rotor orientation comprises

calculating a second rotor orientation vector ($\overrightarrow{\theta_{d,2}}$) on the basis of the stator flux ($\overrightarrow{\psi_s}$), the stator current ($\overrightarrow{i_s}$), and the known other rotor inductance component ($L_d$), and

forming the second estimate ($\overrightarrow{\theta_{est,2}}$) on the basis of a ratio between an *x* component and an *y* component of the second rotor orientation vector ($\overrightarrow{\theta_{d,2}}$).

**8.** A method according to any one of claims 1 to 7, wherein the method comprises estimating a rotor speed ($\omega_{est}$) of a synchronous reluctance motor on the basis of the estimated rotor orientation ($\overrightarrow{\theta_{est}}$).

**9.** A method according to claim 8, wherein the method of estimating the rotor speed comprises steps of:

setting a value for a feedback speed term ($\omega_{PLL}$),
calculating a value for a feedback angle term ($\theta_{PLL}$) by integrating the feedback speed term ($\omega_{PLL}$),
determining an estimate ($\omega_{est}$) for the rotor speed on the basis of a difference between the feedback angle term ($\theta_{PLL}$) and the estimated rotor orientation ($\theta_{est}$), and
determining a new value for a feedback speed term ($\omega_{PLL}$) on the basis of a difference between the feedback angle term ($\theta_{PLL}$) and the estimated rotor orientation ($\theta_{est}$).

**10.** An apparatus (21) adapted to be connected to a synchronous reluctance motor (23), the motor (23) comprising a stator and a rotor, and the apparatus (21) comprising means (26, 27, 28) for determining a stator flux ($\overrightarrow{\psi_s}$) and a stator current ($\overrightarrow{i_s}$), wherein an inductance of the rotor in rotor coordinates is represented by a known rotor quadrature axis inductance component ($L_q$) and a known rotor direct axis inductance component ($L_d$), **character-ized** in that the apparatus (21) further comprises:

means (29) for forming a first estimate ($\overrightarrow{\theta_{est,1}}$) of the rotor orientation on the basis of the stator flux ($\overrightarrow{\psi_s}$), the stator current ($\overrightarrow{i_s}$), and one ($L_q$) of the known rotor inductance components
means (30) for forming a second estimate ($\overrightarrow{\theta_{est,2}}$) of the rotor orientation on the basis of the stator flux ($\overrightarrow{\psi_s}$), the stator current ($\overrightarrow{i_s}$), and the other known rotor inductance component ($L_d$),
means for determining values for a weighting parameters,
means (31) for determining the rotor orientation ($\theta_{est}$) on the basis of the first estimate ($\theta_{est,1}$) and the second estimate ($\theta_{est,2}$), wherein the values of the first and second estimates ($\theta_{est,1}$, $\theta_{est,2}$) are weighted on the basis of the weighting parameters.

**Patentansprüche**

**1.** Verfahren zum Schätzen einer Rotorausrichtung eines synchronen Reluktanzmotors, der einen Stator und einen

**EP 2 493 067 B1**

Rotor umfasst, wobei eine Induktanz des Rotors in Rotorkoordinaten durch eine bekannte Rotor-Quadraturachseninduktanzkomponente ($L_q$) und eine bekannte Rotor-Längsachsenindiktanzkomponente ($L_d$) repräsentiert wird, und wobei das Verfahren einen Schritt zum Bestimmen eines Statorflusses ($\vec{\psi_s}$) und eines Statorstroms ($\vec{\iota_s}$) umfasst, **dadurch gekennzeichnet, dass** das Verfahren des Weiteren folgende Schritte umfasst:

Bilden einer ersten Schätzung der Rotorausrichtung auf Basis des Statorflusses ($\vec{\psi_s}$), des Statorstroms ($\vec{\iota_s}$) und einer ($L_q$) der bekannten Rotorinduktanzkomponenten,
Bilden einer zweiten Schätzung der Rotorausrichtung auf Basis des Statorflusses ($\vec{\psi_s}$), des Statorstroms ($\vec{\iota_s}$) und der anderen bekannten Rotorinduktanzkomponente ($L_d$),
Bestimmen von Werten für Gewichtungsparameter ($k_a, k_b$), und
Bestimmen der Rotorausrichtung auf Basis der ersten Schätzung und der zweiten Schätzung, wobei die Werte der ersten und zweiten Schätzung auf Basis der Gewichtungsparameter ($k_a$, $k_b$) gewichtet werden.

2. Verfahren nach Anspruch 1, wobei der Wert für den Gewichtungsparameter auf Basis einer Ausrichtung bestimmt wird, die durch einen Winkel zwischen einer Rotorlängsachse und dem Statorfluss ($\vec{\psi_s}$) repräsentiert wird.

3. Verfahren nach Anspruch 1, wobei der Wert für den Gewichtungsparameter auf Basis einer Ausrichtung bestimmt wird, die durch einen Winkel zwischen einer Rotorlängsachse und dem Starterstrom ($\vec{\iota_s}$) repräsentiert wird.

4. Verfahren nach Anspruch 1, wobei der Wert für den Gewichtungsparameter auf Basis der Längen der Rotoraus-richtungsvektoren ($\vec{\theta}_{d,1}, \vec{\theta}_{d,2}$) bestimmt wird.

5. Verfahren nach einem der Ansprüche 1 bis 4, wobei das Bestimmen der Rotorausrichtung umfasst:

Bestimmen eines Wertes für einen Korrekturparameter ($l$) auf der Basis eines Verhältnisses zwischen den Rotorinduktanzkomponenten ($L_d, L_q$) und
unter Verwendung des Korrekturparameters ($l$) zum Korrigieren einer Länge eines Ausrichtungssektors ($\vec{\theta}_{d,2}$).

6. Verfahren nach einem der Ansprüche 1 bis 5, wobei das Bilden der ersten Schätzung der Rotorausrichtung umfasst:

Berechnen eines ersten Rotorausrichtungsvektors ($\vec{\theta}_{d,1}$) auf der Basis des Statorflusses ($\vec{\psi_s}$), des Statorstroms ($\vec{\iota_s}$), und einer ($L_q$) der bekannten Rotorinduktanzkomponenten, und
Bilden der ersten Schätzung auf der Basis des ersten Rotorausrichtungsvektors ($\vec{\theta}_{d,1}$), und wobei das Bilden der zweiten Schätzung der Rotorausrichtung umfasst:
Berechnen eines zweiten Rotorausrichtungsvektors ($\vec{\theta}_{d,2}$) auf der Basis des Statorflusses ($\vec{\psi_s}$), des Statorstroms ($\vec{\iota_s}$), und der anderen bekannten Rotorinduktanzkomponente ($L_q$), und
Bilden der zweiten Schätzung auf der Basis des zweiten Rotorausrichtungsvektors ($\vec{\theta}_{d,2}$).

7. Verfahren nach einem der Ansprüche 1 bis 5, wobei das Bilden der ersten Schätzung der Rotorausrichtung umfasst:

Berechnen eines ersten Rotorausrichtungsvektors ($\vec{\theta}_{d,1}$) auf der Basis des Statorflusses ($\vec{\psi_s}$), des Statorstroms ($\vec{\iota_s}$), und einer ($L_q$) der bekannten Rotorinduktanzkomponenten, und
Bilden der ersten Schätzung ($\theta_{est,1}$) auf der Basis eines Verhältnisses zwischen einer $x$-Komponente und einer $y$-Komponente des ersten Rotorausrichtungsvektors ($\vec{\theta}_{d,1}$), und wobei das Bilden der zweiten Schätzung der Rotorausrichtung umfasst:

Berechnen eines zweiten Rotorausrichtungsvektors ($\vec{\theta}_{d,2}$) auf der Basis des Statorflusses ($\vec{\psi_s}$), des Stator-stroms ($\vec{\iota_s}$), und der anderen bekannten Rotorinduktanzkomponente ($L_d$), und
Bilden der zweiten Schätzung ($\theta_{est,2}$) auf der Basis eines Verhältnisses zwischen einer $x$-Komponente und einer $y$-Komponente des zweiten Rotorausrichtungsvektors ($\vec{\theta}_{d,2}$).

8. Verfahren nach einem der Ansprüche 1 bis 7, wobei das Verfahren das Schätzen einer Rotorgeschwindigkeit ($\omega_{est}$) eines synchronen Reluktanzmotors auf der Basis der geschätzten Rotorausrichtung ($\theta_{est}$) umfasst.

9. Verfahren nach Anspruch 8, wobei das Verfahren zum Schätzen der Rotorgeschwindigkeit folgende Schritte umfasst:

Festlegen eines Werts für einen Rückführungsgeschwindigkeitsausdruck ($\omega_{PLL}$),

Berechnen eines Wertes für einen Rückführungswinkelausdruck ($\theta_{PLL}$) durch Integrieren des Rückführungsgeschwindigkeitsausdrucks ($\omega_{PLL}$),

Bestimmen einer Schätzung ($\omega_{est}$) für die Rotorgeschwindigkeit auf der Basis einer Differenz zwischen dem Rückführungswinkelausdruck ($\theta_{PLL}$) und der geschätzten Rotorausrichtung ($\theta_{est}$), und

Bestimmen eines neuen Wertes für den Rückführungsgeschwindigkeitsausdruck ($\omega_{PLL}$) auf der Basis einer Differenz zwischen dem Rückführungswinkelausdruck ($\theta_{PLL}$) und der geschätzten Rotorausrichtung ($\theta_{est}$).

10. Vorrichtung (21), die dazu eingerichtet ist, mit einem synchronen Reluktanzmotor (23) verbunden zu werden, wobei der Motor (23) einen Stator und einen Rotor umfasst, und die Vorrichtung (21) ein Mittel (26, 27, 28) zum Bestimmen eines Statorflusses ($\vec{\psi_s}$) und eines Statorstroms ($\vec{\iota_s}$) umfasst, wobei eine Induktanz des Rotors in den Rotorkoordinaten durch eine bekannte Rotor-Quadraturachseninduktanzkomponente ($L_q$) und eine bekannte Rotor-Längsachseninduktanzkomponente ($L_d$) repräsentiert wird, **dadurch gekennzeichnet, dass** die Vorrichtung (21) des Weiteren umfasst:

ein Mittel (29) zum Bilden einer ersten Schätzung ($\theta_{est,1}$) der Rotorausrichtung auf Basis des Statorflusses ($\vec{\psi_s}$), des Statorstroms ($\vec{\iota_s}$) und einer ($L_q$) der bekannten Rotorinduktanzkomponenten,

ein Mittel (30) zum Bilden einer zweiten Schätzung ($\theta_{est,2}$) der Rotorausrichtung auf Basis des Statorflusses ($\vec{\psi_s}$), des Statorstroms ($\vec{\iota_s}$) und der anderen bekannten Rotorinduktanzkomponente ($L_d$),

ein Mittel zum Bestimmen von Werten für Gewichtungsparameter,

ein Mittel (31) zum Bestimmen der Rotorausrichtung ($\theta_{est,}$) auf der Basis der ersten Schätzung ($\theta_{est,1}$) und der zweiten Schätzung ($\theta_{est,2}$), wobei die Werte der ersten und zweiten Schätzung ($\theta_{est,1}$, $\theta_{est,2}$) auf Basis der Gewichtungsparameter gewichtet werden.

## Revendications

1. Procédé d'estimation d'une orientation de rotor d'un moteur à réluctance synchrone comprenant un stator et un rotor, dans lequel une inductance du rotor en coordonnées de rotor est représentée par une composante d'inductance d'axe en quadrature de rotor connue ($L_q$) et une composante d'inductance d'axe direct de rotor connue ($L_d$) et dans lequel le procédé comprend une étape de détermination d'un flux de stator ($\vec{\psi_s}$) et d'un courant de stator ($\vec{\iota_s}$), **caractérisé en ce que** le procédé comprend les étapes de

formation d'une première estimation de l'orientation du rotor sur la base du flux de stator ($\vec{\psi_s}$), du courant de stator ($\vec{\iota_s}$), et de l'une ($L_q$) des composantes d'inductance de rotor connues,

formation d'une seconde estimation de l'orientation du rotor sur la base du flux de stator ($\vec{\psi_s}$), du courant de stator ($\vec{\iota_s}$) et de l'autre composante d'inductance de rotor connue ($L_d$),

détermination de valeurs pour les paramètres de pondération ($k_a$, $k_b$), et

détermination de l'orientation du rotor sur la base de la première estimation et de la seconde estimation, dans lequel les valeurs des première et seconde estimations sont pondérées sur la base des paramètres de pondération ($k_a$, $k_b$).

2. Procédé selon la revendication 1, dans lequel la valeur pour le paramètre de pondération est déterminée sur la base d'une orientation représentée par un angle entre un axe direct de rotor et le flux de stator ($\vec{\psi_s}$).

3. Procédé selon la revendication 1, dans lequel la valeur pour le paramètre de pondération est déterminée sur la base d'une orientation représentée par un angle entre l'axe direct de rotor et le courant de stator ($\vec{\iota_s}$).

4. Procédé selon la revendication 1, dans lequel la valeur pour le paramètre de pondération est déterminée sur la base de longueurs de vecteurs d'orientation de rotor ($\vec{\theta_{d,1}}$, $\vec{\theta_{d,2}}$).

5. Procédé selon l'une quelconque des revendications 1 à 4, dans lequel la détermination de l'orientation du rotor comprend :

la détermination d'une valeur pour un paramètre de correction (l) sur la base d'un rapport entre les composantes d'inductance de rotor ($L_d$, $L_q$), et

l'utilisation du paramètre de correction (I) pour corriger une longueur d'un vecteur d'orientation ($\overrightarrow{\theta_{d,2}}$) ;

6. Procédé selon l'une quelconque des revendications 1 à 5, dans lequel la première estimation de l'orientation du rotor comprend

le calcul d'un premier vecteur d'orientation du rotor ($\overrightarrow{\theta_{d,1}}$) sur la base du flux de stator ($\overrightarrow{\psi_s}$), du courant de stator ($\overrightarrow{\iota_s}$), et de l'une ($L_q$) des composantes d'inductance de rotor connues, et

la formation de la première estimation sur la base du premier vecteur d'orientation de rotor ($\overrightarrow{\theta_{d,1}}$), et

dans lequel la formation de la seconde estimation de l'orientation du rotor comprend

le calcul d'un second vecteur d'orientation du rotor ($\overrightarrow{\theta_{d,2}}$) sur la base du flux de stator ($\overrightarrow{\psi_s}$), du courant de stator ($\overrightarrow{\iota_s}$), et de l'autre composante d'inductance de rotor connue ($L_d$), et

la formation de la seconde estimation sur la base du second vecteur d'orientation du rotor ($\overrightarrow{\theta_{d,2}}$).

7. Procédé selon l'une quelconque des revendications 1 à 5, dans lequel la formation de la première estimation de l'orientation du rotor comprend

le calcul d'un premier vecteur d'orientation du rotor ($\overrightarrow{\theta_{d,1}}$) sur la base du flux de stator ($\overrightarrow{\psi_s}$), du courant de stator ($\overrightarrow{\iota_s}$), et de l'une ($L_q$) des composantes d'inductance de rotor connues, et

la formation de la première estimation ($\theta_{est,1}$) sur la base d'un rapport entre une composante x et une composante y du premier vecteur d'orientation de rotor ($\overrightarrow{\theta_{d,1}}$), et

dans lequel la formation de la seconde estimation de l'orientation du rotor comprend

le calcul d'un second vecteur d'orientation du rotor ($\overrightarrow{\theta_{d,2}}$) sur la base du flux de stator ($\overrightarrow{\psi_s}$), du courant de stator ($\overrightarrow{\iota_s}$), et de l'autre composante d'inductance de rotor connue ($L_d$), et

la formation de la seconde estimation ($\theta_{est,2}$) sur la base d'un rapport entre une composante x et une composante y du second vecteur d'orientation de rotor ($\overrightarrow{\theta_{d,2}}$).

8. Procédé selon l'une quelconque des revendications 1 à 7, dans lequel le procédé comprend l'estimation d'une vitesse de rotor ($\omega_{est}$) d'un moteur à réluctance synchrone sur la base de l'orientation du rotor estimée ($\theta_{est}$).

9. Procédé selon la revendication 8, dans lequel le procédé d'estimation de la vitesse du rotor comprend les étapes de :

définition d'une valeur pour un terme de vitesse de rétroaction ($\omega_{PLL}$),

calcul d'une valeur pour un terme d'angle de rétroaction ($\theta_{PLL}$) par intégration du terme de vitesse de rétroaction ($\omega_{PLL}$),

détermination d'une estimation ($\omega_{est}$) pour la vitesse du rotor sur la base d'une différence entre le terme d'angle de rétroaction ($\theta_{PLL}$) et l'orientation de rotor estimée ($\theta_{est}$), et

détermination d'une nouvelle valeur pour un terme de vitesse de rétroaction ($\omega_{PLL}$) sur la base d'une différence entre le terme d'angle de rétroaction ($\theta_{PLL}$) et l'orientation de rotor estimée ($\theta_{est}$).

10. Appareil (21) adapté pour être connecté à un moteur à réluctance synchrone (23), le moteur (23) comprenant un stator et un rotor, et l'appareil (21) comprenant des moyens (26, 27, 28) pour déterminer un flux de stator ($\overrightarrow{\psi_s}$) et un courant de stator ($\overrightarrow{\iota_s}$), dans lequel une inductance du rotor en coordonnées de rotor est représentée par une composante d'inductance d'axe en quadrature de rotor connue ($L_q$) et une composante d'inductance d'axe direct de rotor connue ($L_d$), **caractérisé en ce que** l'appareil (21) comprend en outre :

des moyens (29) pour former une première estimation ($\theta_{est,1}$) de l'orientation du rotor sur la base du flux de stator ($\overrightarrow{\psi_s}$), du courant de stator ($\overrightarrow{\iota_s}$), et de l'une ($L_q$) des composantes d'inductance de rotor connues,

des moyens (30) pour former une seconde estimation ($\theta_{est,2}$) de l'orientation du rotor sur la base du flux de stator ($\overrightarrow{\psi_s}$), du courant de stator ($\overrightarrow{\iota_s}$) et de l'autre composante d'inductance de rotor connue ($L_d$),

des moyens pour déterminer des valeurs pour les paramètres de pondération,

des moyens (31) pour déterminer l'orientation du rotor ($\theta_{est}$) sur la base de la première estimation ($\theta_{est,1}$) et de la seconde estimation ($\theta_{est,2}$), dans lequel les valeurs des première et seconde estimations ($\theta_{est1}$, $\theta_{est2}$) sont pondérées sur la base des paramètres de pondération.

Fig. 1a

Fig. 1b

Fig. 1c

Fig. 2a

Fig. 2b

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SEOG-JOO KANG et al.** Position Controlled Synchronous Reluctance Motor Without Rotational Transducer. *Industry Applications Conference,* 1998

- **NAGRIAL M. H.** Developments of Sensorless Synchrounous Reluctance Drive Systems. *Multi Topic Conference,* 2001